# EUROPÄISCHE PATENTSCHRIFT

(11) **EP 0 635 687 B1**
(45) Veröffentlichungstag und Bekanntmachung des Hinweises auf die Patenterteilung: **04.02.1998**
(21) Anmeldenummer: 94108841.1
(22) Anmeldetag: 09.06.1994
(51) Int. Cl.: F24H 9/12

(54) **Zwischen Einrohr- und Zweirohrsystem umstellbares Heizkörperanschlussstück**
Adapter fitting for the selective connection of a radiator to a one or a two pipe system
Raccordement pour radiateur transformable pour systemes à conduite unique ou à conduites doubles

(30) Priorität: 19.07.1993 DE 9310774 U
(43) Veröffentlichungstag der Anmeldung: 25.01.1995
(73) Patentinhaber: Franz Viegener II GmbH & Co. KG., 57439 Attendorn (DE)
(72) Erfinder: Viegener, Walter, D-57439 Attendorn-Biekhofen (DE)
(74) Vertreter: Stracke, Alexander, Dipl.-Ing.

(56) Entgegenhaltungen:
- DE-A- 3 120 396
- FR-A- 2 486 194
- US-A- 4 129 149

## Beschreibung

Die Erfindung bezieht sich auf ein zwischen Einrohr- und Zweirohrsystem umstellbares Heizkörperanschlußstück mit einem Vorlauf- und einem Rücklaufstutzen und zwei Heizkörperanschlußstutzen, wobei zwischen dem Vorlauf- und dem Rücklaufstutzen eine durch einen entfembaren Stopfen verschließbare Bypassleitung vorgesehen ist.

Beim Einrohrsystem ist jedem Heizkörper nur eine Rohrleitung zugeordnet. Ein Teil der Wärmemenge, die dem Heizkörper zugeführt wird, fließt in den Heizkörper, während ein anderer Teil direkt zum nächsten Heizkörper weitergeleitet wird.

Beim Zweirohrsystem ist jeder Heizkörper mit einer Vorlaufleitung und einer Rücklaufleitung ausgerüstet. Die volle durch die Vorlaufleitung zugeführte Wärmemenge durchfließt den Heizkörper.

Umstellbare Heizkörperanschlußstücke der eingangs genannten Art, die sowohl beim Einrohrsystem als auch beim Zweirohrsystem eingesetzt werden können, sind bekannt.

Die DE-A-31 20 396 beschreibt ein Heizkörperanschlußstück, bei dem zwischen dem Vorlaufstutzen und dem Rücklaufstutzen eine mittels eines Stopfens verschließbare Bypassleitung vorgesehen ist. Der Stopfen ist als Stellschraube ausgebildet, die von außen betätigt wird.

Durch die US-A-4 129 149 ist ein Stopfen für den Bypasskanal zwischen dem Vorlaufstutzen und dem Rücklaufstutzen bekannt, der mit einem Außengewindeteil versehen ist und einen Schraubenkopf aufweist. Dieser Schraubenkopf ist an der Außenseite des Heizkörperanschlußstücks angeordnet und jederzeit zugänglich.

Der Erfindung liegt die Aufgabe zugrunde, ein Heizkörperanschlußstück der eingangs genannten Art so zu gestalten, daß das Anschlußstück den Stopfen zum Verschlie-ßen der Bypassleitung vollständig aufnimmt.

Diese Aufgabe wird erfindungsgemäß dadurch gelöst, daß der Stopfen ausschließlich durch den Rücklaufstutzen montierbar bzw. demontierbar ist.

Sofern das Heizkörperanschlußstück in einem Zweirohrsystem verwendet werden soll, muß die Bypassleitung mit dem Stopfen verschlossen werden, bevor die Fertigmontage des Zweirohrsystems erfolgt.

Für den Einsatz des Heizkörperanschlußstücks im Einrohrsystem wird die Bypassleitung benutzt, um einen Teilstrom des durch den Vorlaufstutzen zugeführten Heizmediums sogleich zu benachbarten Heizkörper weiterzuleiten. In diesem Fall entfällt die Verwendung des Stopfens.

Weitere Merkmale der Erfindung ergeben sich aus den Unteransprüchen.

Ein Ausführungsbeispiel des erfindungsgemäßen Heizkörperanschlußstücks ist in den Zeichnungen dargestellt und wird im folgenden beschrieben. Es zeigen:
- Figur 1: die Verwendung des Heizkörperanschlußstücks in einem Zweirohrsystem,
- Figur 2: ein Einrohrsystem, das mit dem erfindungsgemäßen Heizkörperanschlußstück ausgerüstet ist und
- Figur 3: das Heizkörperanschlußstück im Längsschnitt.

Das Heizkörperanschlußstück 1 weist ein Gehäuse 2 auf und ist mit einem Vorlaufstutzen 3, einem Rücklaufstutzen 4 und den Heizkörperanschlußstutzen 5 und 6 ausgerüstet.

Im Gehäuse ist eine Hülse 7 vorgesehen, die an einem Ende ein Gewindestück 8 aufweist und in ein Innengewinde des Gehäuses eingeschraubt ist, während das andere Ende der Hülse sich bis zum Sitz 9 eines Ventilkörpers 10 erstreckt, der ein Gewindestück 11 aufweist und in ein Innengewinde des Gehäuses eingeschraubt ist. In der dargestellten Verschlußstellung des Ventilkörpers liegt seine Ventilfläche 12 an der Sitzfläche des Gehäuses an und verschließt den Strom des Heizmediums aus dem Innenraum der Hülse 7 in den Rücklaufstutzen 4.

Die im Gehäuse 2 angeordnete Montageöffnung 13 für den als Gewindespindel ausgebildeten Ventilkörper 10 ist durch eine Kappe 14 verschließbar. Der Ventilkörper kann durch die Kappe 14 unmittelbar oder mittelbar betätigt werden.

Die Kappe 14 kann einen Zapfen 15 aufweisen, der zumindest im Bereich des freien Endes als Mehrkant ausgebildet ist und in eine Mehrkantaufnahme der Gewindespindel einführbar ist.

Es ist auch denkbar, zwischen der Kappe 14 und der Gewindespindel einen Übertragungsmechanismus anzuordnen.

Zwischen dem Vorlaufstutzen 3 und dem Rücklaufstutzen 4 ist eine Bypassleitung 16 vorgesehen, die durch einen entfernbaren Stopfen 17 verschließbar ist.

In dem dargestellten Ausführungsbeispiel ist der Stopfen als Schraube 17 ausgebildet, die in ein mit Innengewinde versehenes Teilstück der Bypassleitung 16 eindrehbar ist.

Der Kopf 18 der Schraube 17 ist für ein Betätigungswerkzeug durch den Rücklaufstutzen 4 zugänglich.

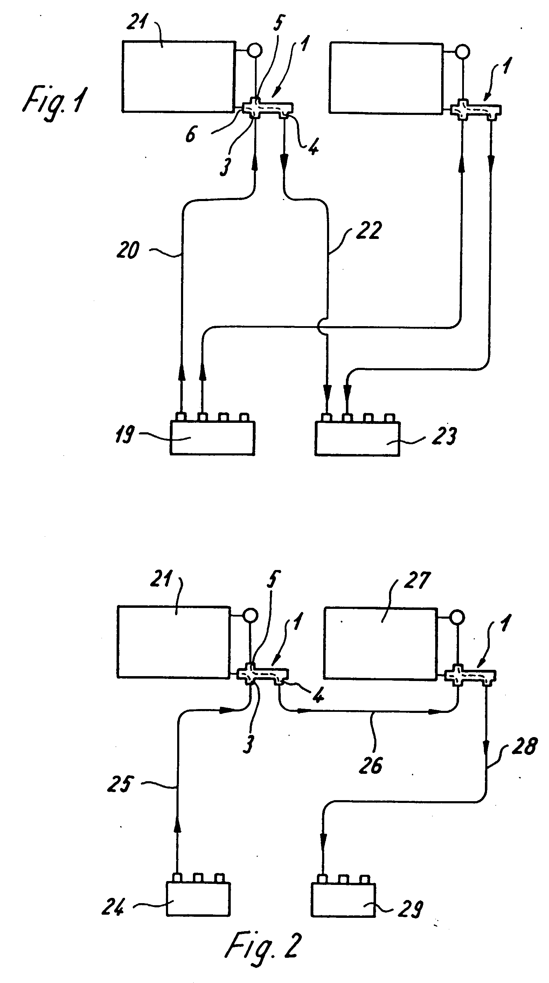

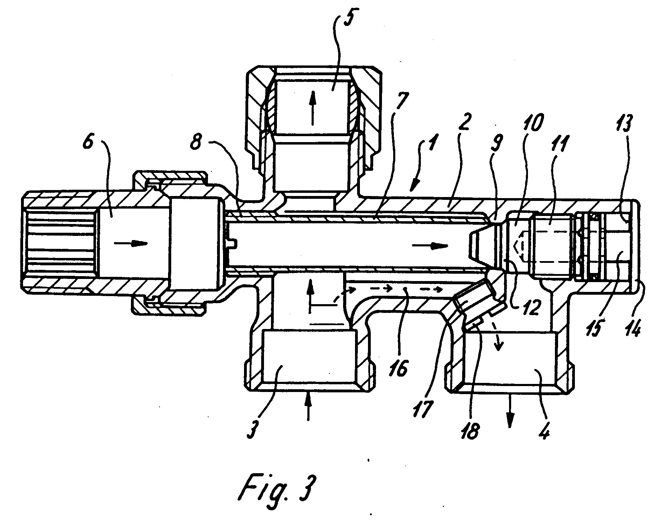

Das in der Fig. 3 aufgezeigte Anschlußstück, bei dem die Bypassleitung 16 durch die Schraube 17 verschlossen ist, kann in dem in der Fig. 1 aufgezeigten Zweirohrsystem eingesetzt werden.

Das Heizmedium strömt von einem Vorlaufverteiler 19 durch die Vorlaufleitung 20 in den Vorlaufstutzen 3, umströmt die Hülse 7 und gelangt durch den Stutzen 5 in den Heizkörper 21.
Das Heizmedium durchströmt den Heizkörper 21 und fließt dann durch den Stutzen 6, den Innenraum der Hülse 7 und bei geöffnetem Ventil durch den Rücklaufstutzen 4 in die Rücklaufleitung 22 zum Rücklaufverteiler 23.

Sofern das Anschlußstück 1 entsprechend der Darstellung nach der Fig. 2 im Einrohrsystem eingesetzt werden soll, ist es nur erforderlich, die Schraube 17 zu entfernen, so daß die Bypassleitung 16 eine Verbindung zwischen dem Vorlaufstutzen 3 und dem Rücklaufstutzen 4 bildet.

Im Einrohrsystem fließt das Heizmedium vom Vorlaufverteiler 24 durch die Leitung 25 in den Vorlaufstutzen 3. Ein Teilstrom zweigt dann ab und durchfließt die Bypassleitung 16 und den Stutzen 4 und von dort durch die Leitung 26 zum nächsten Heizkörper 27, während der andere Teilstrom durch den Stutzen 5 dem Heizkörper 21 zugeführt wird.

Über die Rücklaufleitung 28 gelangt das Medium zum Rücklaufverteiler 29.

In dem Ausführungsbeispiel des Heizkörperanschlußstücks nach der Fig. 3 bilden die mit dem Ventilsitz (9) versehene Gehäusewand und die Gehäusewand mit der Aufnahmebohrung des Stopfens bzw. der Schraube (17) einen stumpfen Winkel.

## Patentansprüche

1. Zwischen Einrohr- und Zweirohrsystem umstellbares Heizkörperanschlußstück mit einem Vorlauf- (3) und einem Rücklaufstutzen (4) und zwei Heizkörperanschlußstutzen (5,6), wobei zwischen dem Vorlauf- und dem Rücklaufstutzen eine durch einen entfembaren Stopfen verschließbare Bypassleitung (16) vorgesehen ist, **dadurch gekennzeichnet,** daß der Stopfen ausschließlich durch den Rücklaufstutzen (4) montierbar bzw. demontierbar ist.

2. Heizkörperanschlußstück nach Anspruch 1, dadurch gekennzeichnet, daß der Stopfen als in ein mit Innengewinde versehenes Teilstück der Bypassleitung (16) eindrehbare Schraube (17) ausgebildet und der Kopf (18) der Schraube (17) für ein Betätigungswerkzeug durch den Rücklaufstutzen (4) zugänglich ist.

3. Heizkörperanschlußstück nach Anspruch 1, dadurch gekennzeichnet, daß der Stopfen als Einsteckbolzen ausgebildet ist.

4. Heizkörperanschlußstück nach Anspruch 1, dadurch gekennzeichnet, daß als im Anschlußstück angeordnete, zum Rücklaufstutzen (4) führende Leitung eine Hülse (7) vorgesehen ist, deren eines Ende sich bis zum Sitz (9) eines als Gewindespindel ausgebildeten Ventilkörpers (10) erstreckt, und daß die mit dem Ventilsitz versehene Gehäusewand und die Gehäusewand mit der Aufnahmebohrung des Stopfens einen stumpfen Winkel bilden.

## Claims

1. A heating body connecting portion convertable between a singlepipe and a double-pipe system, having a flow connection (3) and a return connection (4) and two heating body connections (5, 6), wherein provided between the flow and the return connections is a bypass conduit (16) closable by a removable plug, characterised in that the plug can be fitted and dismantled exclusively through the return connection (4).

2. A heating body connecting portion according to claim 1 characterised in that the plug is in the form of a screw (17) which can be screwed into a portion of the bypass conduit (16), which is provided with a female screwthread, and the head (18) of the screw (17) is accessible for an actuating tool through the return connection (4).

3. A heating body connecting portion accordig to claim 1 characterised in that the plug is in the form of a push-in pin member.

4. A heating body connecting portion according to claim 1 characterised in that a sleeve (7) is provided as a conduit which is disposed in the connecting portion and which leads to the return connection (4), one end of the sleeve extending to the seat (9) of a valve body (10) in the form of a screwthreaded spindle, and that the housing wall provided with the valve seat and the housing wall with the bore receiving the plug form an obtuse angle.

## Revendications

1. Raccord de radiateur adaptable à des systèmes à un ou deux tubes, avec un embout d'entrée (3) et un embout de sortie (4) et deux embouts de raccordement de radiateur (5,6), une conduite de dérivation (16) pouvant se fermer au moyen d'un bouchon amovible étant prévue entre l'embout d'entrée et l'embout de sortie, caractérisé en ce que le bouchon se monte et se démonte exclusivement à travers l'embout de sortie (4).

2. Raccord de radiateur selon la revendication 1, caractérisé en ce que le bouchon est conformé en vis (17) s'insérant dans une partie de la conduite de dérivation (16) munie d'un taraudage intérieur et la tête (18) de la vis (17) est accessible à un outil de manoeuvre à travers l'embout de sortie (4).

3. Raccord de radiateur selon la revendication 1, caractérisé en ce que le bouchon est conformé en cheville démontable.

4. Raccord de radiateur selon la revendication 1, caractérisé en ce que, comme conduite placée dans le raccord et conduisant à l'embout de sortie (4), il est prévu une douille (7), dont une extrémité s'étend jusqu'au siège (9) d'un corps de vanne (10) conformé en broche filetée, et en ce que la paroi du boîtier munie du siège de vanne et la paroi du boîtier munie du perçage de réception du bouchon forment un angle obtus.
